# EUROPEAN PATENT SPECIFICATION

(11) **EP 2 150 888 B1**
(45) Date of publication and mention of the grant of the patent: **23.11.2011**
(21) Application number: 08746713.0
(22) Date of filing: 23.04.2008
(51) Int. Cl.: G06F 7/58

(54) **INITIAL SEED MANAGEMENT FOR PSEUDORANDOM NUMBER GENERATOR**
ANFANGSKEIMVERWALTUNG FÜR EINEN PSEUDOZUFALLSZAHLENGENERATOR
GESTION DE VALEUR DE DÉPART INITIALE POUR UN GÉNÉRATEUR DE NOMBRE PSEUDO-ALÉATOIRES

(30) Priority: 23.04.2007 US 738972
(43) Date of publication of application: 10.02.2010
(73) Proprietor: QUALCOMM Incorporated, San Diego, CA 92121 (US)
(72) Inventor: ROSE, Gregory, Gordon, San Diego, California 92121 (US); GANTMAN, Alexander, San Diego, California 92121 (US); XIAO, Lu, San Diego, California 92121 (US); FIGUEROA, David, San Diego, California 92121 (US)
(74) Representative: Howe, Steven
(86) International application number: PCT/US2008/061341
(87) International publication number: WO 2008/131444

(56) References cited:
- WO-A-00/75761
- WO-A-02/093809
- WO-A-2007/037869
- US-A- 6 104 810
- US-A1- 2005 129 247
- US-A1- 2006 104 443
- JOHN KELSEY ET AL: "Cryptanalytic Attacks on Pseudorandom Number Generators" FAST SOFTWARE ENCRYPTION 5TH INTERNATIONAL WORKSHOP, FSE '98, 23 March 1998 (1998-03-23), pages 168-188, XP002306326 Springer-Verlag, Berlin, Germany ISBN: 3-540-64265-X cited in the application
- VIEGA J: "Practical random number generation in software" COMPUTER SECURITY APPLICATIONS CONFERENCE, 2003. PROCEEDINGS. 19TH ANN UAL 8-12 DEC. 2003, PISCATAWAY, NJ, USA,IEEE, 8 December 2003 (2003-12-08), pages 129-140, XP010673769 ISBN: 978-0-7695-2041-4
- AURELIEN FRANCILLON ET AL: "TinyRNG: A Cryptographic Random Number Generator for Wireless Sensors Network Nodes" MODELING AND OPTIMIZATION IN MOBILE, AD HOC AND WIRELESS NETWORKS AND WORKSHOPS, 2007. WIOPT 2007. 5TH INTERNATIONAL SYMPOSIUM ON, IEEE, PISCATAWAY, NJ, USA, 16 April 2007 (2007-04-16), pages 1-7, XP031239752 ISBN: 978-1-4244-0960-0

## Description

### BACKGROUND

### Field

The present invention relates to secure pseudorandom number generators and more particularly to seed management for initializing a pseudo-random number generator in electronic devices.

### Background

Generation of random numbers has many applications, including cryptographic uses (e.g., keys used for encryption and integrity protection, nonces used for security protocols, etc.) for example. A true random number is impossible to be predicted with probability higher than average. In the real world, it is extremely hard to obtain a perfect random number source.

A pseudo-random number generator (PRNG) is often employed that uses a deterministic algorithm to generate pseudo-random numbers. The PRNG can produce numbers at a very fast speed. Given a random input called a seed, a very long sequence of pseudo-random numbers can be generated deterministically. Without knowledge of this seed, it is infeasible or very hard to distinguish the generator from a random source. While there are many PRNGs available, most are not designed for security applications. Because PRNGs use deterministic algorithms, they are exposed to hacking, thereby weakening the security of the PRNG. For example, a linear congruential generator is widely used as a PRNG but can be broken after a short sequence of output is analyzed.

Some applications, such as cryptographic applications, typically use "random" numbers as initialization vectors, keys, nonces, salts, etc. Generally, a cryptographically secure PRNG (CSPRNG) is seeded with unpredictable inputs in a secure way so that it is infeasible to distinguish its output from a sequence of random bits.

A pseudo-random number generation scheme is relatively straightforward in a CSPRNG. It can be, for example, a block cipher running in counter mode or output feedback mode, a stream cipher using a seed as cipher key, or a nested structure of hashing. A complicated part in CSPRNG design is how to seed and reseed the CSPRNG. Ideally, the CSPRNG is seeded with some information that makes the internal state of the generator unpredictable before it is called by an application. Reseeding is a process used to update the sequential logic of a CSPRNG, which has been previously seeded, with a new seed. Such reseeding makes it more difficult to break a deterministic number generation algorithm. However, it costs time for an entropy collection module to get a good seed. Thus, seeding or reseeding a CSPRNG before it is called by an application is a common problem since, upon power up, the CSPRNG may be called by an application before such a seed is available.

There exist a number of standardized CSPRNG designs, such as FIPS 186-2, ANSI X9.17-1985 Appendix C, ANSI X9.31-1998 Appendix A.2.4, and ANSI X9.62-1998 Annex A.4. Unfortunately, many of these designs are not satisfactory under certain circumstances. For example, two design flaws of ANSI X9.17 PRNG have been identified by J. Kelsey et al. at Fast Software Encryption, 5th International Workshop Proceedings, Springer-Verlag, 1998. Additionally, National Institute of Standards and Technology (NIST) Special Publication 800-90, titled "Recommendation for Random Number Generator Using Deterministic Random Bit Generators", June 2006, also discloses a system for initializing a pseudorandom number generator but fails to provide adequate security features against hacking.

US 2006/104443 discloses a random number generator intended to be resistant to side channel attacks that includes an activation pseudo random number generator having an activation output connected to an activation seed input to provide a next seed to the activation seed input. A second random number generator includes a second seed input, which receives the next seed and a random data output, which random data in accordance with the next seed. The next seed is stored in seed memory to be used by the activation pseudo random number generator as the activation seed inpit for the next startup cycle.

Therefore, there is a need for a pseudo-random number generator where a seed can be quickly and securely obtained.

### SUMMARY

A secure seeding and reseeding scheme is provided for pseudorandom number generators by using a pre-stored initialization seed. This scheme initializes a pseudorandom number generator into an unknown state even when entropy collection is unavailable. A primary seed file and a shadow seed file are maintained with seeding information in a secure file system. If the primary seed file is corrupted, the pseudorandom number generator is seeded with the content of the shadow seed file. A trusted timer may be used as part of the seeding mechanism as a countermeasure to hacking of the seed files. A trusted timer or clock is mixed with pre-stored seed information to add entropy even when the pre-stored seed information has been compromised.
A method for operating a pseudorandom number generator is provided. A startup internal state of the pseudorandom number generator is initialized with a pre-stored primordial seed. The stored primordial seed is destroyed after it has been used once. A new seed is obtained from one or more unpredictable sources of entropy and the new seed is used to modifying the internal state of the pseudorandom number generator into an unpredictable state. A pseudorandom output is generated based on the modified internal state of the pseudorandom number generator. The pseudorandom output is then be stored in a seed file as an initialization seed for a subsequent startup internal state of the pseudorandom number generator. Storing the pseudorandom output in a seed file includes (1) storing the pseudorandom output in a primary seed file in a secure file system and (2) storing the pseudorandom output in a shadow seed file in the secure file system. Upon restarting the pseudorandom number generator, a determination is made as to whether the integrity of the primary seed file has been compromised. If the integrity of the primary file is successfully verified, the startup internal state of the pseudorandom number generator is initialized with the initialization seed of the primary seed file. Otherwise, if the integrity check of the primary seed file fails, the startup internal state of the pseudorandom number generator is initialized with the initialization seed of the shadow seed file.

The primordial seed may be stored in a secure location during manufacturing of the pseudorandom number generator. Reseeding of the pseudorandom number generator may be periodically performed according to an interval timer.

In another example, a time value is then obtained from a trusted source. The time value and initialization seed are then combined to obtain a modified initialization seed. The time value and initialization seed may be combined such that the time value is dissipated into the whole range of the modified initialization seed. A startup internal state of the pseudorandom number generator may be initialized with the modified initialization seed. The content of the seed file may then be replaced with a new initialization seed obtained from pseudorandom output of the pseudorandom number generator.

A pseudorandom number generator is also provided, comprising: (a) means for initializing a startup internal state of the pseudorandom number generator with a pre-stored primordial seed; (b) means for destroying the stored primordial seed after it has been used once; (c) means for obtaining a new seed from one or more unpredictable sources of entropy; (d) means for modifying the internal state of the pseudorandom number generator into an unpredictable state with the new seed; (e) means for generating a pseudorandom output based on the modified internal state of the pseudorandom number generator; (f) means for storing the pseudorandom output in a seed file as an initialization seed for a subsequent startup internal state of the pseudorandom number generator; (g) means for storing the primordial seed in a secure location during manufacturing of the pseudorandom number generator; (h) means for retrieving the initialization seed from the seed file after the pseudorandom number generator is restarted; (i) means for initializing the startup internal state of the pseudorandom number generator with the initialization seed; and (j) means for replacing the content of the seed file with a new initialization seed obtained from the pseudorandom number generator.

The pseudorandom number generator also comprises: (a) means for storing the pseudorandom output in a primary seed file in a secure file system; (b) means for storing the pseudorandom output in a shadow seed file in the secure file system; (c) means for determining whether the integrity of the primary seed file has been compromised upon restarting the pseudorandom number generator; (d) means for initializing the startup internal state of the pseudorandom number generator with the initialization seed of the primary seed file if the integrity of the primary file is successfully verified; and (e) means for initializing the startup internal state of the pseudorandom number generator with the initialization seed of the shadow seed file otherwise.

In one example, the pseudorandom number generator may further comprise:
(a) means for retrieving the initialization seed from the seed file after the pseudorandom number generator is restarted; (b)means for obtaining a time value from a trusted source; (c) means for combining the time value and initialization seed to obtain a modified initialization seed; (d) means for initializing a startup internal state of the pseudorandom number generator with the modified initialization seed; and (e) means for replacing the content of the seed file with a new initialization seed obtained from pseudorandom output of the pseudorandom number generator. The time value and initialization seed may be combined such that the time value is dissipated into the whole range of the modified initialization seed.

A processing circuit is also provided comprising a memory device and a processing device. The memory device includes one or more internal state registers to store the internal state of a pseudorandom number generator. The processing device is coupled to the memory device and configured to (a) initialize a startup internal state of the pseudorandom number generator with a pre-stored primordial seed; (b) destroy the stored primordial seed after it has been used once; (c) obtain a new seed from one or more unpredictable sources of entropy; (d) reseed the pseudorandom number generator with the new seed to modify the internal state of the pseudorandom number generator into an unpredictable state; (e) generate a pseudorandom output based on the modified internal state of the pseudorandom number generator; and (f) store the pseudorandom output in a seed file as an initialization seed for a subsequent startup internal state of the pseudorandom number generator.

The processing device being further configured to (a) store the pseudorandom output in a primary seed file in a secure file system; (b) store the pseudorandom output in a shadow seed file in the secure file system; (c) determine whether the integrity of the primary seed file has been compromised upon restarting the pseudorandom number generator; (d) initialize the startup internal state of the pseudorandom number generator with the initialization seed of the primary seed file if the integrity of the primary file is successfully verified; and (e) initialize the startup internal state of the pseudorandom number generator with the initialization seed of the shadow seed file otherwise.

According to one feature, the processing device may be further configured to (a) retrieve the initialization seed from the seed file after the pseudorandom number generator is restarted; (b) obtain a time value from a trusted source; (c) combine the time value and initialization seed to obtain a modified initialization seed; (d) initialize a startup internal state of the pseudorandom number generator with the modified initialization seed; and (e) replace the content of the seed file with a new initialization seed obtained from pseudorandom output of the pseudorandom number generator. The time value and initialization seed may be combined such that the time value is dissipated into the whole range of the modified initialization seed.

A machine-readable medium is also provided having one or more instructions for generating pseudorandom output, which when executed by a processor causes the processor to: (a) initialize a startup internal state of the pseudorandom number generator with a pre-stored primordial seed; (b) destroy the stored primordial seed after it has been used once; (c) obtain a new seed from one or more unpredictable sources of entropy; (d) reseed the pseudorandom number generator with the new seed to modify the internal state of the pseudorandom number generator into an unpredictable state; (e) generate a pseudorandom output based on the modified internal state of the pseudorandom number generator; and (f) store the pseudorandom output in a seed file as an initialization seed for a subsequent startup internal state of the pseudorandom number generator.

The seed file includes a primary seed file and a shadow seed file in a secure file system. The machine-readable medium further has one or more instructions which when executed by a processor causes the processor to: (a) determine whether the integrity of the primary seed file has been compromised upon restarting the pseudorandom number generator; (b) initialize the startup internal state of the pseudorandom number generator with the initialization seed of the primary seed file if the integrity of the primary file is successfully verified; and (c) initialize the startup internal state of the pseudorandom number generator with the initialization seed of the shadow seed file otherwise.

In one example, the machine-readable medium may further have one or more instructions which when executed by a processor causes the processor to: (a) retrieve the initialization seed from the seed file after the pseudorandom number generator is restarted; (b) obtain a time value from a trusted source; (c) combine the time value and initialization seed to obtain a modified initialization seed; (d) initialize a startup internal state of the pseudorandom number generator with the modified initialization seed; and (e) replace the content of the seed file with a new initialization seed obtained from pseudorandom output of the pseudorandom number generator. The time value and initialization seed are combined such that the time value is dissipated into the whole range of the modified initialization seed.

### BRIEF DESCRIPTION OF THE DRAWINGS

Figure 1 is a block diagram illustrating an example of a pseudorandom number generator in which one or more novel features described herein may implemented.

Figure 2 is a block diagram illustrating one example of a pseudorandom number generator having initial seed management.

Figure 3 illustrates a method for initializing a pseudorandom number generator using pre-stored seeds according to one example.

Figure 4 is a block diagram illustrating a system that anticipates power shutoffs and stores pseudorandom output for subsequent startup initialization of a pseudorandom number generator.

Figure 5 illustrates a method for operating a device to generate and save an initialization seed upon detection of some power off event.

Figure 6 illustrates a method for using a primary seed file and a shadow seed file to store an initialization seed for a pseudorandom number generator.

Figure 7 is a block diagram illustrating an example of how a time component may be utilized to counter hacking of the seed file.

Figure 8 illustrates a method for combining time as part of an initialization seed for a pseudorandom number generator.

Figure 9 is a block diagram illustrating a processing circuit comprising a storage medium and a processor configured to implement a pseudorandom number generator.

### DETAILED DESCRIPTION

In the following description, specific details are given to provide a thorough understanding of the embodiments. However, it will be understood by one of ordinary skill in the art that the embodiments may be practiced without these specific details. For example, circuits may be shown in block diagrams, or not be shown at all, in order not to obscure the embodiments in unnecessary detail. In other instances, well-known circuits, structures and techniques may not be shown in detail in order not to obscure the embodiments.

Also, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

Moreover, a storage medium may represent one or more devices for storing data, including read-only memory (ROM), random access memory (RAM), magnetic disk storage mediums, optical storage mediums, flash memory devices, and/or other machine readable mediums for storing information. The term "machine readable medium" includes, but is not limited to portable or fixed storage devices, optical storage devices, wireless channels, and various other mediums capable of storing, containing, or carrying instruction(s) and/or data.

Furthermore, embodiments may be implemented by hardware, software, firmware, middleware, microcode, or a combination thereof. When implemented in software, firmware, middleware, or microcode, the program code or code segments to perform the necessary tasks may be stored in a machine-readable medium such as a storage medium or other storage means. A processor may perform the necessary tasks. A code segment may represent a procedure, a function, a subprogram, a program, a routine, a subroutine, a module, a software package, a class, or a combination of instructions, data structures, or program statements. A code segment may be coupled to another code segment or a hardware circuit by passing and/or receiving information, data, arguments, parameters, or memory contents. Information, arguments, parameters, data, and the like, may be passed, forwarded, or transmitted via a suitable means including memory sharing, message passing, token passing, and network transmission, among others.

One feature provides a secure seeding and reseeding scheme for pseudorandom number generators by using a pre-stored initialization seed. This scheme initializes a pseudorandom number generator into an unknown state even when entropy collection is unavailable.

Another aspect of the seeding scheme provides for maintaining a primary seed file and a shadow seed file with seeding information in a secure file system. If the primary seed file is corrupted, the pseudorandom number generator is seeded with the content of the shadow seed file.

Yet another feature provides the use of a trusted timer as part of the seeding mechanism as a countermeasure to hacking of the seed files. A trusted timer or clock is mixed with pre-stored seed information to add entropy even when the pre-stored seed information has been compromised.

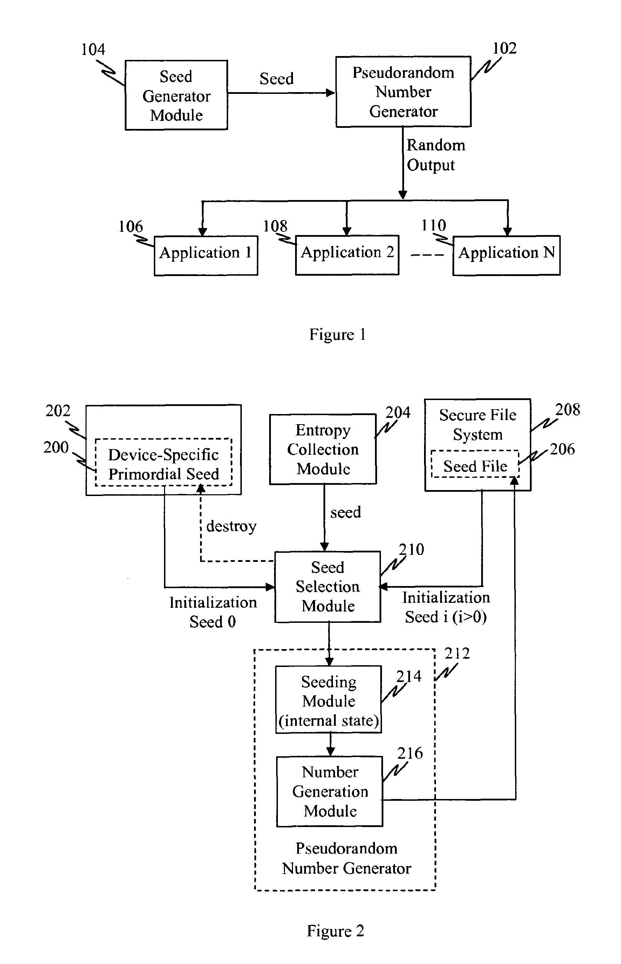

Figure 1 is a block diagram illustrating an example of a pseudorandom number generator in which one or more novel features described herein may implemented. Upon startup, the pseudorandom number generator 102 is configured to receive a seed from a seed generator module 104 to initialize the pseudorandom number generator 102 into an unknown state. The pseudorandom number generator 102 may be invoked by one or more applications 106, 108 and 110 to obtain a pseudorandom output of bits, symbols, and/or numbers.

Because collecting entropy with which to initialize the state of the pseudorandom number generator 102 takes time, one feature pre-stores a startup seed for this purpose. For example, the seed generator module 104 may store such startup seed so that it can be used to initialize the pseudorandom number generator into an unpredictable state even when other entropy information is unavailable. Thus, upon startup of the pseudorandom number generator 102, it can be quickly seeded by the pre-stored seed.

Figure 2 is a block diagram illustrating one example of a pseudorandom number generator having initial seed management. The pseudorandom number generator may be incorporated as part of an electronic device, such as a mobile phone, computer, circuit board, chip, processor, semiconductor device, set-top box, etc., and/or a software, firmware, middleware, or microcode module. A device-specific primordial seed 200 may be stored in a storage device 202 (e.g., non-volatile memory) during manufacturing of the electronic device. In this process, the primordial seed 200 may be stored through an external interface of the storage device 202. Such primordial seed 200 may be generated offline using, for example, a different random number generator. Access to the storage device 202 where the primordial seed 200 is stored is preferably restricted so that no subsequent external read or write operation is allowed. This inhibits hackers from changing or knowing the primordial seed 200.

When the pseudorandom number generator 212 is powered up for operation for the first time, the primordial seed 200 is fed into the pseudorandom number generator 212. The entropy in the primordial seed 200 ensures that the pseudorandom number generator 212 is initialized to an unknown or unpredictable state. By doing so, the pseudorandom number generator 212 can provide pseudo-random numbers (output) for different applications immediately upon startup.

After a period of time, an entropy collection module 204 provides another seed to the pseudorandom number generator 212 with which the pseudorandom number generator 212 is reseeded. For example, a process may be initiated to request M bytes (e.g., M=128 bytes) of random data from the pseudorandom number generator 212 and store these M bytes into a seed file 206 in a secure file system 208. Once the seed file 206 is created, the primordial seed 200 in the storage device 202 is deleted or destroyed (e.g., reset to all zeros).

A seed selection module 210 may be coupled to the pseudorandom number generator 212 and to one or more seed sources 202, 204, and 208. For instance, the seed selection module 210 may be configured to select between the primordial seed 200 and the seed file 206 when the pseudorandom number generator is started or powered up. Additionally, the seed selection module 210 may obtain seed(s) from an entropy collection module 204 with which to periodically or sporadically reseed the pseudorandom number generator 212. The entropy collection module 204 may be configured to collect random data or information from one or more sources that may then be used to generate a seed.

When the pseudorandom number generator 212 is subsequently restarted (e.g., after power cycling), the seed selection module 210 checks the storage device 202 to determine if a valid primordial seed is available. Since the primordial seed 200 in the storage device 202 has been deleted or destroyed, the storage device 202 may contain zeros or a flag indicating that the seed file 206 is available and/or should be used. The seed selection module 210 then obtains an initialization seed from the seed file 206 and uses it to initialize the internal state of the pseudorandom number generator 212 to an unknown or unpredictable state. The secure file system 208 ensures confidentiality and integrity of the seed file 206. In one example, a secure file system may use cryptography to protect confidentiality and integrity of the seed file 206 content. In another example, the secure file system is inaccessible to the user and/or operating system of the device but is accessible by the seed selection module 210 and/or pseudorandom number generator 212.

The pseudorandom number generator 212 may include a seeding module 214 that receives seeds to initialize the internal state(s) of the pseudorandom number generator 212. A number generator module 216 then generates pseudorandom output based on the states set by the seeding module 214.

Some of the pseudorandom output from the pseudorandom number generator 212 may be stored as an initialization seed for subsequent power ups. This process of storing new random information in the seed file 206 and using it to reseed the pseudorandom number generator 212 upon startup is repeated so that different initialization seeds are used each time. The pseudorandom output stored in the seed file 206 (as an initialization seed) is obtained after the pseudorandom number generator 212 has been reseeded with a seed containing entropy (e.g., from the entropy collection module 204).

In an alternative implementation, the primordial seed 200 may instead be stored directly in the seed file 206 during manufacturing or other secure initialization procedure. The primordial seed may then be destroyed after the first initialization of the pseudorandom number generator 212 and random information is stored in the seed file 206 for subsequent reseeding of the pseudorandom number generator 212.

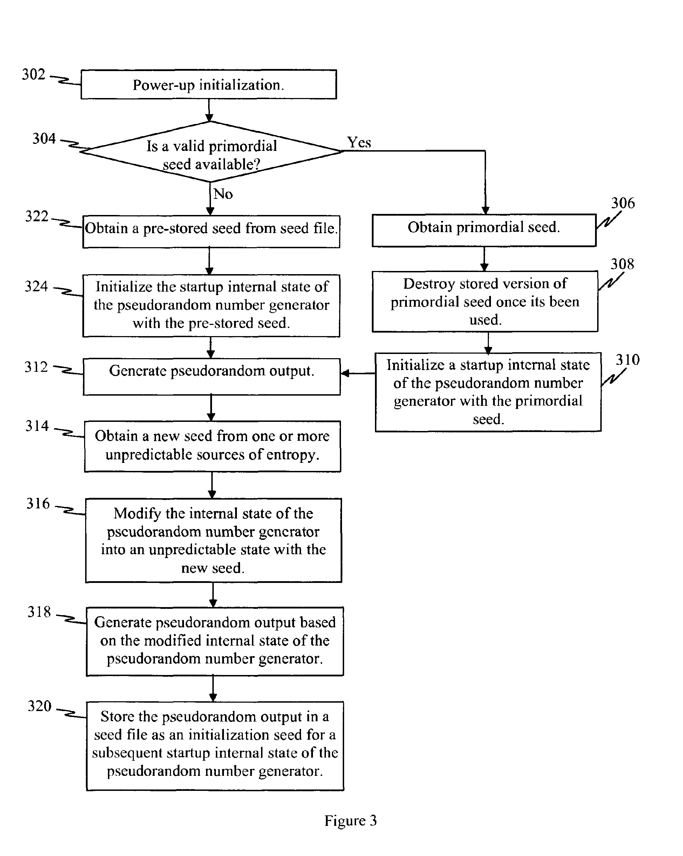

Figure 3 illustrates a method for initializing a pseudorandom number generator using pre-stored seeds according to the invention. During power-up initialization 302 of the pseudorandom number generator, a determination is made as to whether a primordial seed is available 304. The availability of a primordial seed may indicate that this is the first time that the pseudorandom number generator is being initialized. If such primordial seed is available, it is obtained 306 from a secure storage source and the stored version of the primordial seed is destroyed once it has been used 308. Destroying the stored primordial seed may serve as a future indicator that the pseudorandom number generator has been previously started. Alternatively, a flag may be set in a secure location to indicate the same. The startup internal state of the pseudorandom number generator is then initialized with the primordial seed 310 to generate a pseudorandom output 312. At this point, the pseudorandom number generator is able to provide pseudorandom output (e.g., numbers, bits, bytes, symbols, etc.) to a calling application.

One or more sources of entropy may be used to obtain a new seed 314. The internal state of the pseudorandom number generator is modified into an unpredictable state with the new seed 316. Pseudorandom output is then generated based on the modified internal state of the pseudorandom number generator 318. The pseudorandom output is stored in a seed file as an initialization seed for a subsequent startup internal state of the pseudorandom number generator 320. A startup internal state refers to the state of the pseudorandom number generator immediately after it has been powered up.

When the pseudorandom number generator is powered on subsequent times, then the primordial seed is no longer available 304. Thus, a pre-stored seed is obtained from the seed file 322 instead. The startup internal state of the pseudorandom number generator is then initialized with the pre-stored seed 324 and the pseudorandom number generator is able to generate pseudorandom output 312. This initial seeding process is repeated during subsequent startups of the pseudorandom number generator.

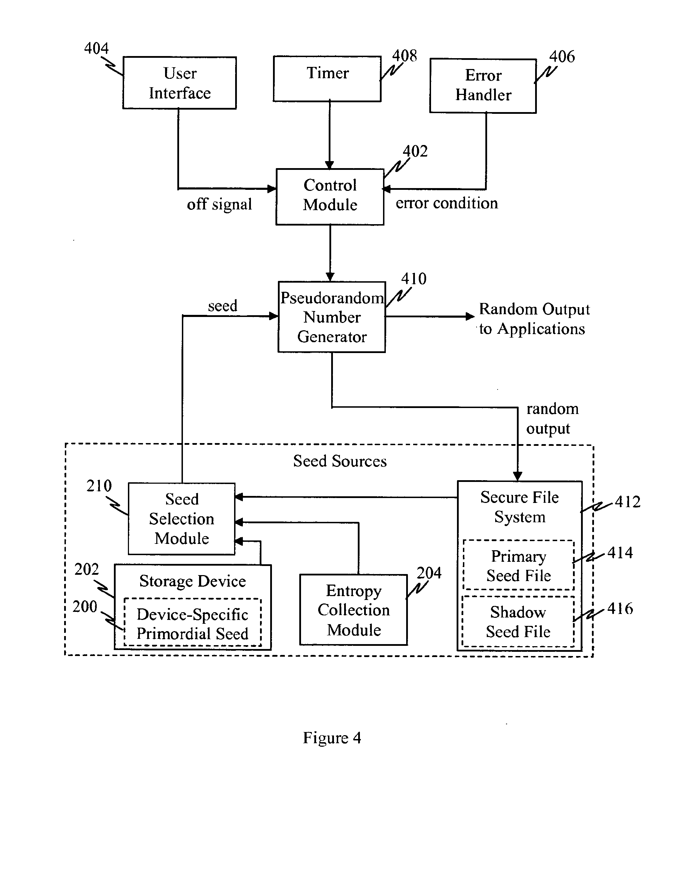

Figure 4 is a block diagram illustrating a system that anticipates power shutoffs and stores pseudorandom output for subsequent startup initialization of a pseudorandom number generator. The pseudorandom number generator may be incorporated as part of an electronic device (e.g., chip, circuit, etc). Such device may be powered off when: (1) the user turns off the power to the device, (2) the device shuts itself down due to some error(s), and/or (3) the device crashes.

A control module 402 may collect information from various sources to determine whether the device is about to shutoff. For instance, the control module 402 may be coupled to a user interface 404. (e.g., on/off switch, etc.) to detect when a user turns the device off. Similarly, the control module 402 may be coupled to an error handler 406 that detects when an error has occurred and shuts off the device in a controlled manner. When either the user interface 404 or the error handler 406 indicates that the device is about to be turned off, the control module 402 may be configured to cause the pseudorandom number generator 410 to generate a pseudorandom output and store it in the seed file 414 in a secure file system 412.

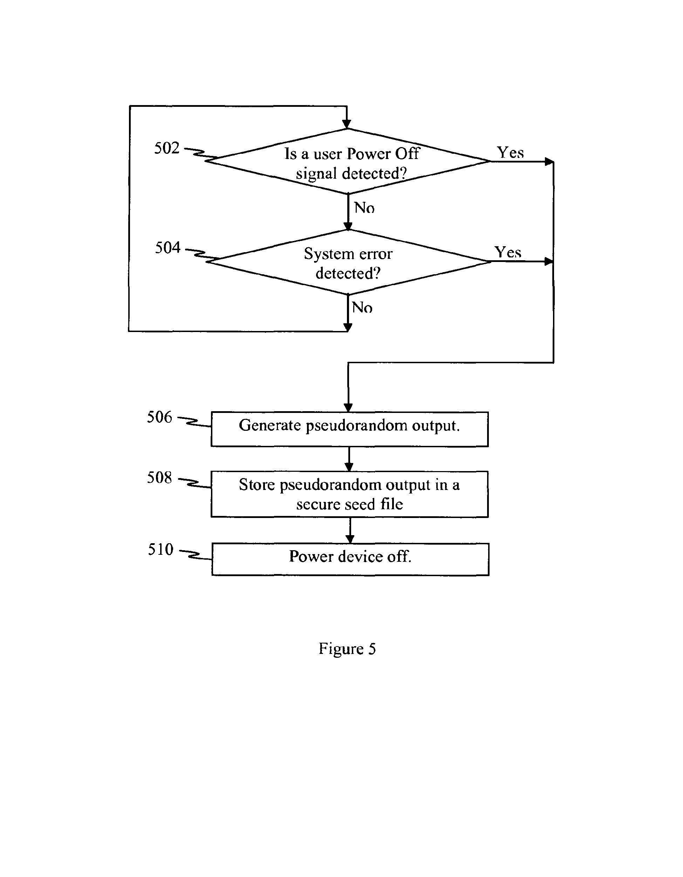

Figure 5 illustrates a method for operating a device to generate and save an initialization seed upon detection of some power off event. For example, if a power off signal is detected 502 or a system error is detected 504, a pseudorandom output is generated 506 and stored in a secure seed file 508 prior to powering off the device 510. The pseudorandom output stored in the secure seed file may be used on the next power up to initialize a pseudorandom number generator.

However, when a fatal error occurs (e.g., the device runs out of the power or a denial-of-service attack causes memory corruption), it may be difficult to detect the device crashing and the seed file 414 may not be successfully updated before the device shuts off. To address this problem, a timer 408 is coupled to the control module 402. The control module 402 receives a periodic signal from the timer 408 that causes the control module 402 to request that the pseudorandom number generator 410 provide a pseudorandom output to be stored in the seed file 414.

One threat to using the seed file 414 is forgery of the seed file. One countermeasure is to locate the seed file 414 in a secure file system 412 in a privileged partition. The privileged partition may reside outside a normal file system, and as such cannot be erased via system updates. The normal file access interface of the system is not aware of the existence of the secure file system 412.

Another feature provides for maintaining a primary seed file 414 and a shadow seed file 416 in the secure file system 412 (within the privileged partition). Seed information is first saved to the primary seed file 414 and then to the shadow seed file 416. In the event that a fatal error occurs while writing to the primary seed file 414, the previously unused seed information is still stored in the shadow seed file 416 and is used to initialize the pseudorandom number generator 410 on the next power up. This way there is always good seed information available during power-up to initialize the pseudorandom number generator 410.

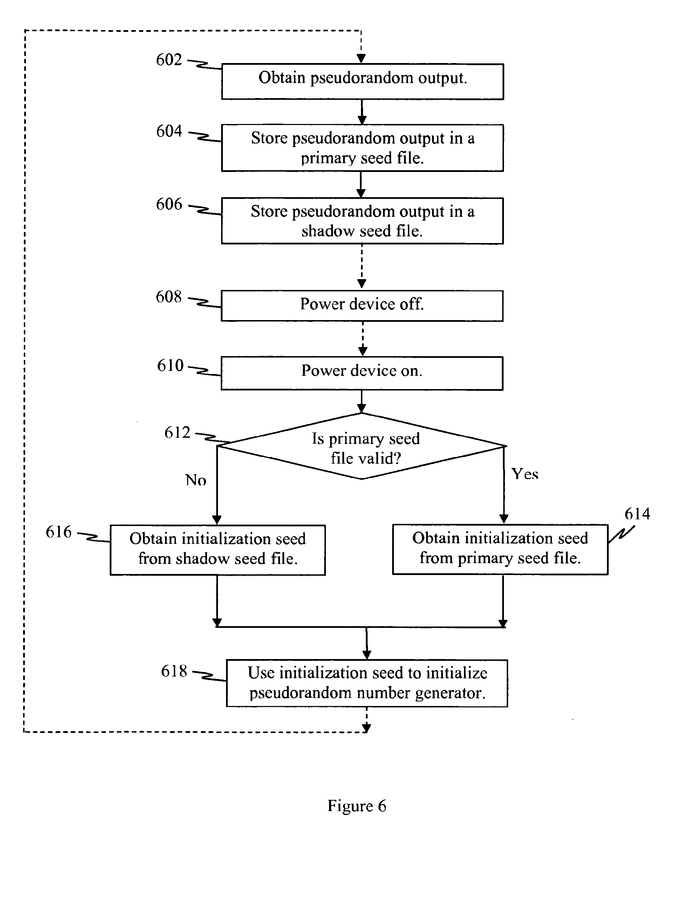

Figure 6 illustrates the method according to the invention for using a primary seed file and a shadow seed file to store an initialization seed for a pseudorandom number generator. Pseudorandom output is obtained 602 from the pseudorandom number generator. The pseudorandom output (e.g., bits, symbols, numbers, etc.) is first stored in a primary seed file 604 to be used subsequently as an initialization seed. The pseudorandom output may replace other content previously stored in the primary seed file. The same pseudorandom output is then stored in a shadow seed file 606. Subsequently, the pseudorandom number generator may be powered off 608.

When the pseudorandom number generator is powered back on 610, the integrity and/or authenticity of the primary seed file may be checked to determine whether it is valid 612. If the primary seed file is valid, the initialization seed is obtained from the content of the primary seed file 614. Otherwise, if the primary seed file is not valid (e.g., the file content is corrupt), the initialization seed is obtained from the content of the shadow seed file 616. The initialization seed is used to initialize the pseudorandom number generator 618. The pseudorandom number generator may then provide pseudorandom output to calling applications. This process may be repeated every time the pseudorandom random number generator is powered off and on so that different initialization seeds are used to initialize the pseudorandom number generator.

In some implementations, it may not be possible to use a privileged partition (where the secure file system 412 is maintained). Without such privileged partition, it may be possible for a hacker to overwrite the seed file with a legal copy of a previous seed file that was backed up. Then, the hacker may immediately crash the device that incorporates the pseudorandom number generator (e.g., by disconnecting the power source) thereby tricking the device into using the previous seed file on the next power up cycle. Since the previous seed file is a legal copy, it would be accepted by the pseudorandom number generator during power-up stage. The pseudorandom number generator may then produce the same output sequence during power-up stage every time the hacker uses the same previous seed file until it is reseeded by the entropy collection module. Thus, the hacker may be able to control the initial output of the pseudorandom number generator.

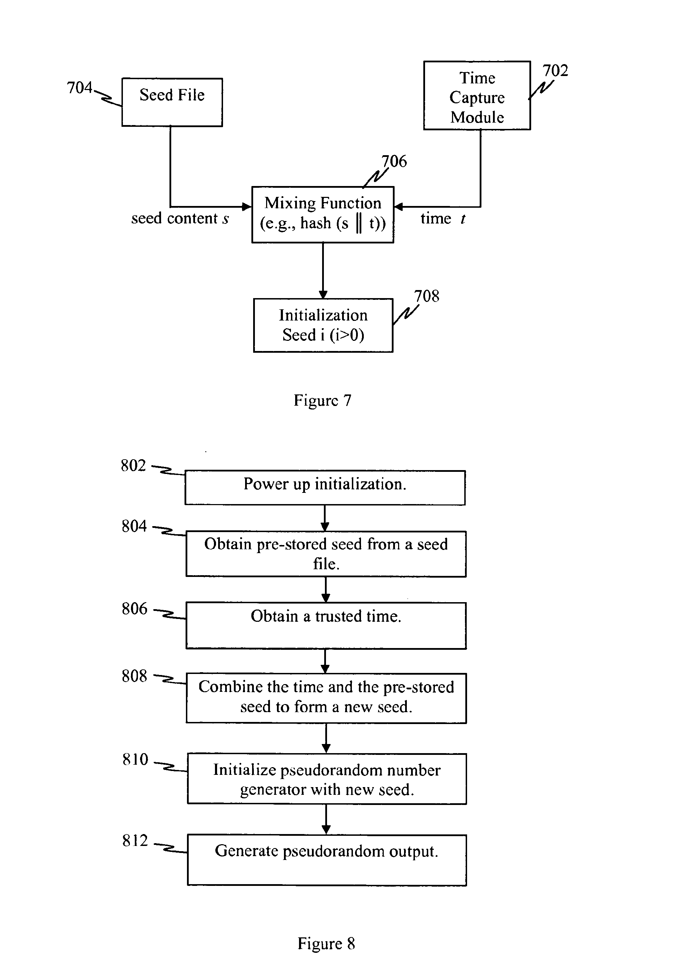

To counter such hacking, one feature provides for using time as part of a startup initialization seed to further protect the pseudorandom number generator against hacking. Figure 7 is a block diagram illustrating an example of how a time component may be utilized to counter hacking of the seed file. A time capture module 702 is used to capture time from a trustable internal clock or some time signal from a network (e.g., CDMA network). The seed contents from the seed file 704 is mixed with the time t (from time capture module 702) to form an initial seed 708. The mixing function 706 may be selected or configured so that each bit change in time *t* is dissipated into the whole range of the function output. In this manner, any change in the time t would cause the whole initialization seed 708 to change. One example of the mixing function 706 is a hash algorithm (e.g., *init_seed =* hash (*s* ∥ *t*), where "∥" denotes concatenation). As a result, even if the same seed file is reused, a new time *t*' makes the initial seed hash(*s* ||*t')* different from hash(*s* ∥ *t*). The initial seed 708 may then be used to initialize the pseudorandom number generator.

Figure 8 illustrates a method for combining time as part of an initialization seed for a pseudorandom number generator. Upon powering up of the pseudorandom number generator 802, a pre-stored seed is obtained from a seed file 804. A trusted time is obtained 806 (from a secure source) and combined with the pre-stored seed to form a new initialization seed 808. The new seed is used to initialize a pseudorandom number generator 810 and generate pseudorandom output 812.

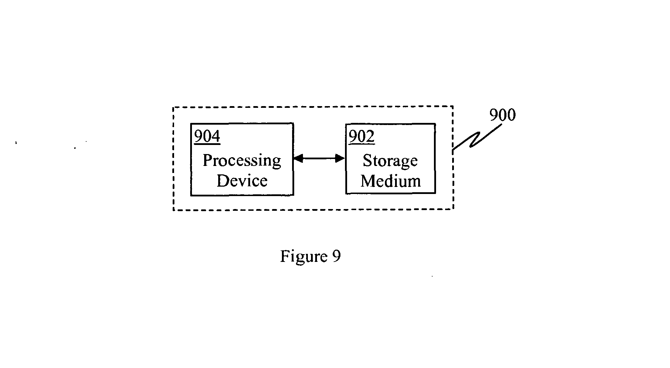

Figure 9 is a block diagram illustrating a processing circuit 900 comprising a storage medium 902 and a processor 904 configured to implement a pseudorandom number generator. The storage medium 902 may be a memory device and/or hard drive, for example, that includes one or more internal state registers to store the internal state of a pseudorandom number generator. The processing device 904 may be configured to initialize a startup internal state of the pseudorandom number generator with a pre-stored primordial seed. The stored primordial seed may be destroyed after it has been used once. A new seed may be obtained from one or more unpredictable sources of entropy. The pseudorandom number generator is initialized with the new seed to modify the internal state of the pseudorandom number generator into an unpredictable state. A pseudorandom output is generated based on the modified internal state of the pseudorandom number generator. The pseudorandom output is stored in a seed file as an initialization seed for a subsequent startup internal state of the pseudorandom number generator.

In one implementation, the processing device may be further configured to (1) retrieve the initialization seed from the seed file after the pseudorandom number generator is restarted, (2) obtain a time value from a trusted source, (3) combine the time value and initialization seed to obtain a modified initialization seed, (4) initialize a startup internal state of the pseudorandom number generator with the modified initialization seed, and/or (5) replace the content of the seed file with a new initialization seed obtained from pseudorandom output of the pseudorandom number generator. The time value and initialization seed may be combined such that the time value is dissipated into the whole range of the modified initialization seed.

The processing device may be further configured to (1) store the pseudorandom output in a primary seed file and a shadow file in a secure file system, (2) determine whether the integrity of the primary seed file has been compromised upon restarting the pseudorandom number generator, (3) initialize the startup internal state of the pseudorandom number generator with the initialization seed of the primary seed file if the integrity of the primary file is successfully verified, and/or (4) initialize the startup internal state of the pseudorandom number generator with the initialization seed of the shadow seed file otherwise.

In another example, the storage medium 902 may be a machine-readable medium that stores instructions which, when executed by the processor 904 may cause the processor 904 to (1) initialize a startup internal state of the pseudorandom number generator with a pre-stored primordial seed, (2) destroy the stored primordial seed after it has been used once, (3) obtain a new seed from one or more unpredictable sources of entropy, (4) reseed the pseudorandom number generator with the new seed to modify the internal state of the pseudorandom number generator into an unpredictable state, (5) generate a pseudorandom output based on the modified internal state of the pseudorandom number generator, and/or (6) store the pseudorandom output in a seed file as an initialization seed for a subsequent startup internal state of the pseudorandom number generator. The machine-readable medium (storage medium 902) may further have one or more instructions which when executed by the processor 904 causes the processor to: (1) retrieve the initialization seed from the seed file after the pseudorandom number generator is restarted, (2) obtain a time value from a trusted source, (3) combine the time value and initialization seed to obtain a modified initialization seed, (4) initialize a startup internal state of the pseudorandom number generator with the modified initialization seed, and/or (5) replace the content of the seed file with a new initialization seed obtained from pseudorandom output of the pseudorandom number generator.

According to the invention the seed file includes a primary seed file and a shadow seed file in a secure file system. The machine-readable medium (storage device 902) may further have one or more instructions which when executed by a processor causes the processor to: (1) determine whether the integrity of the primary seed file has been compromised upon restarting the pseudorandom number generator, (2) initialize the startup internal state of the pseudorandom number generator with the initialization seed of the primary seed file if the integrity of the primary file is successfully verified, and/or (3) initialize the startup internal state of the pseudorandom number generator with the initialization seed of the shadow seed file otherwise.

Accordingly a pseudorandom number generator is provided, comprising: (1) means for initializing a startup internal state of the pseudorandom number generator with a pre-stored primordial seed, (2) means for destroying the stored primordial seed after it has been used once, (3) means for obtaining a new seed from one or more unpredictable sources of entropy, (4) means for modifying the internal state of the pseudorandom number generator into an unpredictable state with the new seed, (5) means for generating a pseudorandom output based on the modified internal state of the pseudorandom number generator, and/or (6) means for storing the pseudorandom output in a seed file as an initialization seed for a subsequent startup internal state of the pseudorandom number generator. The pseudorandom number generator may further comprise: (7) means for storing the primordial seed in a secure location during manufacturing of the pseudorandom number generator, (8) means for retrieving the initialization seed from the seed file after the pseudorandom number generator is restarted, (9) means for initializing the startup internal state of the pseudorandom number generator with the initialization seed, and/or (10) means for replacing the content of the seed file with a new initialization seed obtained from the pseudorandom number generator.

One or more of the components, steps, and/or functions illustrated in Figures 1, 2, 3, 4, 5, 6, 7, 8 and/or 9 may be rearranged and/or combined into a single component, step, or function or embodied in several components, steps, or functions without affecting the operation of the pseudo-random number generation. Additional elements, components, steps, and/or functions may also be added without departing from the invention. The apparatus, devices, and/or components illustrated in Figures 1, 2, 4, 7 and/or 9 may be configured to perform one or more of the methods, features, or steps described in Figures 3, 5, 6, and/or 8. The novel algorithms described herein may be efficiently implemented in software and/or embedded hardware.

Those of skill in the art would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

The description of the embodiments is intended to be illustrative, and not to limit the scope of the claims. As such, the present teachings can be readily applied to other types of apparatuses and many alternatives, modifications, and variations will be apparent to those skilled in the art.

## Claims

1. A method for operating a pseudorandom number generator, comprising:
initializing a startup internal state of the pseudorandom number generator with a pre-stored primordial seed;
destroying the stored primordial seed after it has been used once;
obtaining a new seed from one or more unpredictable sources of entropy;
modifying the internal state of the pseudorandom number generator into an unpredictable state with the new seed;
generating a pseudorandom output based on the modified internal state of the pseudorandom number generator; and
storing the pseudorandom output in a seed file as an initialization seed for a subsequent startup internal state of the pseudorandom number generator, **characterized:**
**in that** storing the pseudorandom output in a seed file includes storing the
pseudorandom output in a primary seed file in a secure file system and storing the pseudorandom output in a shadow seed file in the secure file system;
and **in that** the method further comprises:
determining whether the integrity of the primary seed file has been compromised upon restarting the pseudorandom number generator;
initializing the startup internal state of the pseudorandom number generator with the initialization seed of the primary seed file if the integrity of the primary file is successfully verified; and
initializing the startup internal state of the pseudorandom number generator with the initialization seed of the shadow seed file otherwise.

2. The method of claim 1 further comprising:
storing the primordial seed in a secure location during manufacturing of the pseudorandom number generator.

3. The method of claim 2 wherein reseeding of the pseudorandom number generator is periodically performed according to an interval timer.

4. The method of claim 1 further comprising:
retrieving the initialization seed from the seed file after the pseudorandom number generator is restarted;
obtaining a time value from a trusted source;
combining the time value and initialization seed to obtain a modified initialization seed;
initializing a startup internal state of the pseudorandom number generator with the modified initialization seed; and
replacing the content of the seed file with a new initialization seed obtained from pseudorandom output of the pseudorandom number generator.

5. The method of claim 4 wherein the time value and initialization seed are combined such that the time value is dissipated into the whole range of the modified initialization seed.

6. A pseudorandom number generator, comprising:
means adapted to initialize a startup internal state of the pseudorandom number generator with a pre-stored primordial seed;
means adapted to destroy the stored primordial seed after it has been used once;
means adapted to obtain a new seed from one or more unpredictable sources of entropy;
means adapted to modify the internal state of the pseudorandom number generator into an unpredictable state with the new seed;
means adapted to generate a pseudorandom output based on the modified internal state of the pseudorandom number generator; and
means adapted to store the pseudorandom output in a seed file as an initialization seed for a subsequent startup internal state of the pseudorandom number generator,
**characterized in that** the means for storing the pseudorandom output in a seed file includes means adapted to store the pseudorandom output in a primary seed file in a secure file system and means adapted to store the pseudorandom output in a shadow seed file in the secure file system;
and **in that** the pseudorandom number generator further comprises:
means adapted to determine whether the integrity of the primary seed file has been compromised upon restarting the pseudorandom number generator;
means adapted to initialize the startup internal state of the pseudorandom number generator with the initialization seed of the primary seed file if the integrity of the primary file is successfully verified; and
means adapted to initialize the startup internal state of the pseudorandom number generator with the initialization seed of the shadow seed file otherwise.

7. The pseudorandom number generator of claim 6 further comprising:
means adapted to store the primordial seed in a secure location during manufacturing of the pseudorandom number generator.

8. The pseudorandom number generator of claim 6 further comprising:
means adapted to retrieve the initialization seed from the seed file after the pseudorandom number generator is restarted;
means adapted to obtain a time value from a trusted source;
means adapted to combine the time value and initialization seed to obtain a modified initialization seed;
means adapted to initialize a startup internal state of the pseudorandom number generator with the modified initialization seed; and
means adapted to replace the content of the seed file with a new initialization seed obtained from pseudorandom output of the pseudorandom number generator.

9. The pseudorandom number generator of claim adapted to combine the time value and initialization seed such that the time value is dissipated into the whole range of the modified initialization seed.

10. The pseudorandom number generator of claimb comprising a processing circuit including
a memory device including one or more internal state registers to store the internal state of the pseudorandom number generator; and wherein the means comprise a processing device coupled to the memory device

11. The processing circuit of claim 10 wherein the processing device is further configured to
retrieve the initialization seed from the seed file after the pseudorandom number generator is restarted;
obtain a time value from a trusted source;
combine the time value and initialization seed to obtain a modified initialization seed;
initialize a startup internal state of the pseudorandom number generator with the modified initialization seed; and
replace the content of the seed file with a new initialization seed obtained from pseudorandom output of the pseudorandom number generator.

12. The processing circuit of claim 11 wherein the processing device is further configured to combine the time value and initialization seed such that the time value is dissipated into the whole range of the modified initialization seed.

13. A machine-readable medium having one or more instructions for generating pseudorandom output, which when executed by a processor causes the processor to perform the method according to any one of claims 1 to 5.

## Patentansprüche

1. Verfahren zum Betreiben eines Pseudozufallszahlengenerators, das Folgendes beinhaltet:
Initialisieren eines internen Startzustands des Pseudozufallszahlengenerators mit einem zuvor gespeicherten Ursprungskeim;
Zerstören des gespeicherten Ursprungskeims nach einmaliger Benutzung;
Gewinnen eines neuen Keims von einer oder mehreren unvorhersehbaren Entropiequellen;
Modifizieren des internen Zustands des Pseudozufallszahlengenerators in einen unvorhersehbaren Zustand mit dem neuen Keim;
Erzeugen eines pseudozufälligen Ausgangs auf der Basis des modifizierten internen Zustands des Pseudozufallszahlengenerators; und
Speichern des pseudozufälligen Ausgangs in einer Keimdatei als Initialisierungskeim für einen nachfolgenden internen Startzustand des Pseudozufallszahlengenerators, **dadurch gekennzeichnet, dass**:
das Speichern des pseudozufälligen Ausgangs in einer Keimdatei das Speichern des pseudozufälligen Ausgangs in einer primären Keimdatei in einem sicheren Dateisystem und das Speichern des pseudozufalligen Ausgangs in einer Schattenkeimdatei in dem sicheren Dateisystem beinhaltet;
und dadurch, dass das verfahren ferner Folgendes beinhaltet:
Ermitteln, ob die Integrität der primären Keimdatei nach dem Neustart des Pseudozufallszahlengenerators kompromittiert wurde;
Inisitialisieren des internen Anfangszustands des Pseudozufallszahlengenerators mit dem Initialisierungskeim der primären Keimdatei, wenn die Integrität der primären Datei erfolgreich geprüft wurde; und
ansonsten Initialisieren des internen Startzustands des Pseudozufallszahlengenerators mit dem Initialisierungskeim der Schattenkeimdatei.

2. Verfahren nach Anspruch 1, das ferner Folgendes beinhaltet:
Speichern des Ursprungskeims an einem sicheren Ort bei der Herstellung des Pseudozufallszahlengenerators.

3. Verfahren nach Anspruch 2, wobei das erneute Bekeimen des Pseudozufallszahlengenerators periodisch gemäß einem Intervall-Timer durchgeführt wird.

4. Verfahren nach Anspruch 1, das ferner Folgendes beinhaltet:
Abrufen des Initialisierungskeims aus der Keimdatei nach dem Neustarten des Pseudozufallszahlengenerators;
Einholen eines Zeitwertes von einer zuverlässigen Quelle;
Kombinieren des Zeitwertes und des Inxtialisierungskeims, um einen modifizierten Initialisierungskeim zu erhalten;
Initialisieren eines internen Startzustands des Pseudozufallszahlengenerators mit dem modifizierten Initialisierungskeim; und
Ersetzen des Inhalts der Keimdatei durch einen neuen Initialisierungskeim, der von dem pseudozufälligen Ausgang des Pseudozufallszahlengenerators erhalten wurde.

5. Verfahren nach Anspruch 4, wobei der Zeitwert und der Initialisierungskeim so kombiniert werden, dass der Zeitwert in den gesamten Bereich des modifizierten Initialisierungskeims verteilt wird.

6. Pseudozufallszahlengenerator, der Folgendes umfasst:
Mittel zum Initialisieren eines internen Startzustands des Pseudozufallszahlengenerators mit einem zuvor gespeicherten Ursprungskeim;
Mittel zum Zerstören des gespeicherten Ursprungskeims nach einmaliger Benutzung;
Mittel zum Gewinnen eines neuen Keims von einer oder mehreren unvorhersehbaren Entropiequellen;
Mittel zum Modifizieren des internen Zustands des Pseudozufallszahlengenerators in einen unvorhersehbaren Zustand mit dem neuen Keim;
Mittel zum Erzeugen eines pseudozufälligen Ausgangs auf der Basis des modifizierten internen Zustands des Pseudozufallszahlengenerators; und
Mittel zum Speichern des pseudozufälligen Ausgangs in einer Keimdatei als Initialisierungskeim für einen nachfolgenden internen Startzustand des ?seudozufallszahlengenerators,
**dadurch gekennzeichnet, dass** das Mittel zum Speichern des pseudozufälligen Ausgangs in einer Keimdatei Mittel zum Speichern des pseudozufälligen Ausgangs in einer primären Keimdatei in einem sicheren Dateisystem und Mittel zum Speichern des pseudozufälligen Ausgangs in einer Schattenkeimdatei in dem sicheren Dateisystem beinhaltet;
und dadurch, dass der Pseudozufallszahlengenerator ferner Folgendes umfasst:
Mittel zum Ermitteln, ob die Integrität der primären Keimdatei nach dem Neustart des Pseudozufallszahlengenerators kompromittiert wurde;
Mittel zum Initialisieren des internen Anfangszustands des Pseudozufallszahlengenerators mit dem Initialisierungskeim der primären Keimdatei, wenn die Integrität der primären Datei erfolgreich geprüft wurde; und
ansonsten Mittel zum Initialisieren des internen Startzustands des Pseudozufallszahlengenerators mit dem Initialisierungskeim der Schattenkeimdatei.

7. Pseudozufallszahlengenerator nach Anspruch 6, der ferner Folgendes umfasst:
Mittel zum Speichern des Ursprungskeims an einem sicheren Ort bei der Herstellung des Pseudozufallszahlengenerators.

8. Pseudozufallszahlengenerator nach Anspruch 6, der ferner Folgendes umfasst:
Mittel zum Abrufen des znitialisierungskeims aus der Keimdatei nach dem Neustarten des Pseudozufallszahlengenerators;
Mittel zum Einholen eines Zeitwertes von einer zuverlässigen Quelle;
Mittel zum Kombinieren des Zeitwertes und des Initialisierungskeims, um einen modifizierten Initialisierungskeim zu erhalten;
Mittel zum Initialisieren eines internen Startzustands des Pseudozufallszahlengenerators mit dem modifizierten Initialisierungskeim; und
Mittel zum Ersetzen des Inhalts der Keimdatei mit einem neuen Tnitialisierungskeim, der von einem pseudozufälligen Ausgang des Pseudozufallszahlengenerators erhalten wird.

9. Psaudozufallszahlengenerator nach Anspruch 8 zum Kombinieren des Zeitwerts und des Initialisierungskeims, so dass der Zeitwert in den gesamten Bereich des modifizierten Initialisierungskeims verteilt wird.

10. Pseudozufallszahlengenerator nach Anspruch 6, der eine Verarbeitungsschaltung mit einem Speichergerät umfasst, das einen oder mehrere interne Zustandsregister beinhaltet, um den internen Zustand des Pseudozufallszahlengenerators zu speichern; und wobei das Mittel ein mit dem Speichergerät gekoppeltes Verarbeitungsgerät umfasst.

11. Verarbeitungsschaltung nach Anspruch 10, wobei das Verarbeitungsgerät ferner konfiguriert ist zum:
Abrufen des Initialisierungskeims aus der Keimdatei nach dem Neustarten des Pseudozufallszahlengenerators;
Einholen eines Zeitwerts von einer zuverlässigen Quelle;
Kombinieren des Zeitwerts und des Initialisierungskeims, um einen modifizierten Initialisierungskeim zu erhalten;
Initialisieren eines internen Startzustands des Pseudozufallszahlengenerators mit dem modifizierten Initialisierungskeim; und
Ersetzen des Inhalts der Keimdatei mit einem neuen Initialisierungskeim, der von einem pseudozufälligen Ausgang des Pseudozufallszahlengenerators erhalten wird.

12. Verarbeitungsschaltung nach Anspruch 11, wobei das Verarbeitungsgerät ferner zum Kombinieren des Zeitwertes und des Initialisierungskeims konfiguriert ist, so dass der Zeitwert in den gesamten Bereich des modifizierten Initialisierungskeims verteilt wird.

13. Maschinenlesbares Medium mit einem oder mehreren Befehlen zum Erzeugen von pseudozufa1ligem Ausgang, die bei Ausführung durch einen Prozessor bewirken, dass der Prozessor das Verfahren nach einem der Ansprüche 1 bis 5 ausführt.

## Revendications

1. Méthode d'exploitation d'un générateur de nombres pseudo-aléatoires, comprenant:
initialiser un état interne de lancement du générateur de nombres pseudo-aléatoires avec une graine primordiale préstockée;
détruire la graine primordiale stockée après qu'elle eut été utilisée une fois;
obtenir une nouvelle graine d'une ou de plusieurs sources imprévisibles d'entropie;
modifier l'état interne du générateur de nombres pseudo-aléatoires en un état imprévisible avec la nouvelle graine;
générer une sortie pseudo-aléatoire basée sur l'état interne modifié du générateur de nombres pseudo-aléatoires; et
stocker la sortie pseudo-aléatoire dans un fichier de graine en tant que graine d'initialisation pour un état interne de lancement subséquent du générateur de nombres pseudo-aléatoires,
**caractérisée :**
**en ce que** stocker la sortie pseudo-aléatoire dans un fichier de graine comprend stocker la sortie pseudo-aléatoire dans un fichier primaire de graine dans un système de fichiers sécurisés et stocker la sortie pseudo-aléatoire dans un double fichier de graine dans le système de fichiers sécurisés;
et **en ce que** la méthode comprend en outre:
déterminer si l'intégrité du fichier primaire de graine a été compromise au relancement du générateur de nombres pseudo-aléatoires;
initialiser l'état interne de lancement du générateur de nombres pseudo-aléatoires avec la graine d'initialisation du fichier primaire de gaine si l'intégrité du fichier primaire est vérifiée avec succès; et
sinon initialiser l'état interne de lancement du générateur de nombres pseudo-aléatoires avec la graine d'initialisation du double fichier de graine.

2. Méthode selon la revendication 1, comprenant en outre :
stocker la graine primordiale à un emplacement sécurisé pendant la fabrication du générateur de nombres pseudo-aléatoires.

3. Méthode selon la revendication 2, dans laquelle le réensemencement du générateur de nombres pseudo-aléatoires est effectué périodiquement selon une horloge interne.

4. Méthode selon la revendication 1, comprenant en outre :
extraire la graine d'initialisation du fichier de graine après le relancement du générateur de nombres pseudo-aléatoires;
obtenir une valeur de temps d'une source de confiance;
combiner la valeur de temps et la graine d'initialisation pour obtenir une graine d'initialisation modifiée;
initialiser un état interne de lancement du générateur de nombres pseudo-aléatoires avec la graine d'initialisation modifiée; et
remplacer le contenu du fichier de graine avec une nouvelle graine d'initialisation obtenue de la sortie pseudo-aléatoire du générateur de nombres pseudo-aléatoires.

5. Méthode selon la revendication 4, dans laquelle la valeur de temps et la graine d'initialisation sont combinées de telle sorte que la valeur de temps est dissipée dans toute la gamme de la graine d'initialisation modifiée.

6. Générateur de nombres pseudo-aléatoires comprenant :
un moyen adapté pour initialiser un état interne de lancement du générateur de nombres pseudo-aléatoires avec une graine primordiale préstockée;
un moyen adapté pour détruire la graine primordiale stockée après qu'elle eut été utilisée une fois;
un moyen adapté pour obtenir une nouvelle graine d'une ou de plusieurs sources imprévisibles d'entropie;
un moyen adapté pour modifier l'état interne du générateur de nombres pseudo-aléatoires en un état imprévisible avec la nouvelle graine;
un moyen adapté pour générer une sortie pseudo-aléatoire basée sur l'état interne modifié du générateur de nombres pseudo-aléatoires; et
un moyen adapté pour stocker la sortie pseudo-aléatoire dans un fichier de graine en tant que graine d'initialisation pour un état interne de lancement subséquent du générateur de nombres pseudo-aléatoires;
**caractérisé en ce que** le moyen pour stocker la sortie pseudo-aléatoire dans un fichier de graine comprend un moyen adapté pour stocker la sortie pseudo-aléatoire dans un fichier primaire de graine dans un système de fichiers sécurisés et un moyen adapté pour stocker la sortie pseudo-aléatoire dans un double fichier de graine dans le système de fichiers sécurisés;
et **en ce que** le générateur de nombres pseudo-aléatoires comprend en outre:
un moyen adapté pour déterminer si l'intégrité du fichier primaire de graine a été compromise au relancement du générateur de nombres pseudo-aléatoires;
un moyen adapté pour initialiser l'état interne de lancement du générateur de nombres pseudo-aléatoires avec la graine d'initialisation du fichier primaire de graine si l'intégrité du fichier primaire de graine est vérifiée avec succès; et
sinon un moyen adapté pour initialiser l'état interne de lancement du générateur de nombres pseudo-aléatoires avec la graine d'initialisation du double fichier de graine.

7. Générateur de nombres pseudo-aléatoires selon la revendication 6, comprenant en outre :
un moyen adapté pour stocker la graine primordiale à un emplacement sécurisé pendant la fabrication du générateur de nombres pseudo-aléatoires.

8. Générateur de nombres pseudo-aléatoires selon la revendication 6, comprenant en outre :
un moyen adapté pour extraire la graine d'initialisation du fichier de graine après le e relancement du générateur de nombres pseudo-aléatoires;
un moyen adapté pour obtenir une valeur de temps d'une source de confiance;
un moyen adapté pour combiner la valeur de temps et la graine d'initialisation pour obtenir une graine d'initialisation modifiée;
un moyen adapté pour initialiser un état interne de lancement du générateur de nombres pseudo-aléatoires avec la graine d'initialisation modifiée; et
un moyen adapté pour remplacer le contenu du fichier de graine avec une nouvelle graine d'initialisation obtenue de la sortie pseudo-aléatoire du générateur de nombres pseudo-aléatoires.

9. Générateur de nombres pseudo-aléatoires selon la revendication 8, adapté pour combiner la valeur de temps et la graine d'initialisation de telle sorte que la valeur de temps est dissipée dans toute la gamme de la graine d'initialisation modifiée.

10. Générateur de nombres pseudo-aléatoires selon la revendication 6, comprenant un circuit de traitement incluant un dispositif de mémoire incluant un ou plusieurs registres d'état interne pour stocker l'état interne du générateur de nombres pseudo-aléatoires; et dans lequel le moyen comprend un dispositif de traitement couplé au dispositif de mémoire.

11. Circuit de traitement selon la revendication 10, dans lequel le dispositif de traitement est configuré en outre pour
extraire la graine d'initialisation du fichier de graine après le relancement du générateur de nombres pseudo-aléatoires;
obtenir une valeur de temps d'une source de confiance;
combiner la valeur de temps et la graine d'initialisation pour obtenir une graine d'initialisation modifiée;
initialiser un état interne de lancement du générateur de nombres pseudo-aléatoires avec la graine d'initialisation modifiée; et
remplacer le contenu du fichier de graine avec une nouvelle graine d'initialisation obtenue d'une sortie pseudo-aléatoire du générateur de nombres pseudo-aléatoires.

12. Circuit de traitement selon la revendication 11, dans lequel le dispositif de traitement est configuré en outre pour combiner la valeur de temps et la graine d'initialisation de telle sorte que la valeur de temps est dissipée dans toute la gamme de la valeur d'initialisation modifiée.

13. Support lisible par machine ayant une ou plusieurs instructions pour générer une sortie pseudo-aléatoire, qui, lorsque exécutée(s) par un processeur, fait/font que le processeur effectue la méthode selon l'une quelconque des revendications 1 à 5.
